# DEMANDE DE BREVET EUROPEEN

(11) **EP 3 235 364 A1**
(43) Date de publication de la demande: **25.10.2017**
(21) Numéro de dépôt: 17166953.4
(22) Date de dépôt: 18.04.2017
(51) Int. Cl.: A01D 41/14, A01D 61/00

(54) **DISPOSITIF DE RÉCOLTE À ENSEMBLE ARBRE PERFECTIONNÉ ET MACHINE AGRICOLE ÉQUIPÉE DU DISPOSITIF DE RÉCOLTE**

(30) Priorité: 18.04.2016 FR 1653423
(71) Demandeur: Atelier 3T, 85190 Aizenay (FR)
(72) Inventeur: THOMIR, Laurent, 85190 AIZENAY (FR)
(74) Mandataire: Cabinet Chaillot

(57) **Abrégé**

La présente invention concerne un dispositif de récolte comprenant un châssis auquel sont reliés des moyens de récolte et un ensemble arbre d'alimentation les surplombant, étant prévus, à une extrémité de l'ensemble arbre d'alimentation, un moyen d'entraînement en rotation de l'ensemble arbre d'alimentation, caractérisé par le fait que l'ensemble arbre d'alimentation est formé par au moins deux arbres à vis sans fin (4a, 4b) accouplés l'un à l'autre de façon à permettre la transmission d'un mouvement de rotation d'un arbre à vis sans fin (4a, 4b) à l'autre, chaque arbre à vis sans fin (4a, 4b) étant accouplé à l'arbre à vis sans fin adjacent (4a, 4b) par une liaison rotule à doigt (7). La présente invention concerne également une machine agricole équipée du dispositif de récolte.

## Description

La présente invention concerne le domaine des dispositifs de récolte et porte en particulier sur un dispositif de récolte à ensemble arbre perfectionné et sur une machine agricole équipée d'un tel dispositif de récolte.

On entend par « récolte » l'action de collecter sur champ des produits agricoles. Ainsi, dans la présente, le terme « récolte » couvre aussi bien l'opération de ramassage d'andains que, par exemple, l'opération de cueillette du maïs, du blé, du tournesol, de la luzerne, etc.

Un dispositif de récolte comprend d'une manière générale un châssis, par lequel le dispositif est fixé à un véhicule motorisé, des moyens de récolte portés par le châssis et configurés pour récolter des produits agricoles d'un type donné, et un arbre d'alimentation, à vis sans fin, surplombant les moyens de récolte et configuré pour acheminer les produits agricoles récoltés par ces dernières jusqu'à une sortie du dispositif de récolte, à partir duquel les produits agricoles sont acheminés vers un matériel de traitement qui est fonction du type de produit agricole récolté.

Les dispositifs de ramassage d'andains, également appelés « pick-up », sont un exemple d'un tel type de dispositif de récolte, les moyens de récolte étant dans ce cas formés par un ramasseur, qui consiste généralement en un rouleau à dents tournant à vive allure, les dents étant configurées pour ramasser des andains, tels que du foin de prairies, de l'herbe, de la luzerne, du trèfle, etc. Les andains ainsi ramassés sont rassemblés par l'arbre d'alimentation avant d'être amené en sortie vers une ensileuse.

Le rendement d'un tel dispositif de ramassage d'andains étant fonction de sa longueur, on a très tôt recherché à rendre maximale cette longueur. Toutefois, afin de permettre à la machine agricole équipée du dispositif de récolte de rouler sur des voies ouvertes à la circulation publique, il est impératif que la machine agricole ait une largeur inférieure au seuil réglementaire.

Pour résoudre ce problème, il a été proposé de réaliser le dispositif de ramassage en deux parties repliables l'une par rapport à l'autre. A cet effet, le châssis est réalisé en deux parties distinctes mobiles hydrauliquement l'une par rapport à l'autre, chaque partie du châssis portant une partie du ramasseur et une partie de l'arbre d'alimentation. Chaque partie d'arbre d'alimentation est montée librement mobile en hauteur par rapport au châssis, généralement mobile en suivant un arc de cercle, de façon à s'adapter naturellement à la quantité d'andains ramassés, qui peut varier le long de l'arbre d'alimentation. Les parties de ramasseur sont quant à elles montées fixes par rapport au châssis.

Des moyens d'entraînement en rotation du ramasseur et de l'arbre d'alimentation peuvent être prévus sur chaque partie de châssis, et chaque partie de ramasseur et chaque partie d'arbre d'alimentation sont entraînées individuellement, en particulier sans accouplement entre les parties d'arbre d'alimentation. Des exemples d'une telle solution sont décrits dans la demande de brevet français FR 2868905 A1 et la demande de brevet européen EP 0755621 A1. Cependant, pour qu'une telle solution, basée sur un double entraînement, soit satisfaisante du point de vue du fonctionnement, et en particulier pour éviter tout bourrage des andains, il est indispensable d'assurer une parfaite synchronisation des moyens d'entraînement, ce qui en pratique se révèle être délicat à assurer.

Une solution à ce problème consisterait à accoupler les deux parties d'arbre d'alimentation par un système de crabotage à crabots axiaux, du type de celui illustré dans les demandes FR 2868905 A1 et EP 0755621 A1 pour la solidarisation des deux parties de ramasseur, dans lequel des crabots s'étendent perpendiculairement à une face plane perpendiculaire à l'axe longitudinale des parties d'arbre.

En principe, un tel accouplement des deux parties d'arbre permettrait de ne prévoir qu'un seul entraînement à une extrémité de l'arbre d'alimentation.

Toutefois, une telle solution n'est pas réalisable en pratique. En effet, étant donné que les deux parties de l'arbre d'alimentation sont montées librement mobiles en hauteur, elles seront amenées lors du fonctionnement à se situer à différentes hauteurs, et l'on comprend aisément que cela conduira au décollement des crabots et donc à l'interruption de la transmission du mouvement de rotation entre les deux parties d'arbre d'alimentation.

La Demanderesse a recherché une solution à ce problème d'assurer un accouplement entre deux parties d'arbre d'alimentation tout en permettant un déplacement relatif entre celles-ci dans un plan perpendiculaire à l'axe de l'arbre d'alimentation lors de l'utilisation de la machine, et propose selon la présente invention de réaliser cet accouplement par une liaison rotule à doigt qui offre deux degrés de liberté en rotation permettant aux deux parties d'arbre d'alimentation de se déplacer relativement l'une par rapport à l'autre tout en évitant une interruption de la transmission de mouvement de rotation le long de l'arbre d'alimentation.

La Demanderesse s'est rendue compte que le principe de cet accouplement par une liaison rotule à doigt n'est pas limité aux dispositifs de récolte qui sont réalisés en plusieurs parties afin d'être repliables, mais qu'il peut également être appliqué à des dispositifs de récolte dont le châssis est en une seule partie, auquel cas la présente invention permet de réaliser des dispositifs de récolte ayant des arbres d'alimentation plus longs, car pouvant être réalisés en plusieurs parties grâce à l'invention, et donc des rendements plus importants, tout en améliorant leur fiabilité et leur dimensionnement.

La présente invention a ainsi pour objet un dispositif de récolte destiné à être fixé à un véhicule motorisé, le dispositif de récolte comprenant un châssis auquel sont reliés des moyens de récolte configurés pour récolter des produits agricoles sur champ et un ensemble arbre d'alimentation surplombant les moyens de récolte et configuré pour collecter les produits agricoles récoltés par les moyens de récolte et les acheminer vers une sortie du dispositif de récolte, étant prévu, à une extrémité de l'ensemble arbre d'alimentation, un moyen d'entraînement en rotation de l'ensemble arbre d'alimentation, caractérisé par le fait que l'ensemble arbre d'alimentation est formé par au moins deux arbres à vis sans fin accouplés l'un à l'autre de façon à permettre la transmission d'un mouvement de rotation d'un arbre à vis sans fin à l'autre, chaque arbre à vis sans fin étant accouplé à l'arbre à vis sans fin adjacent par une liaison rotule à doigt dont le centre est l'intersection des axes longitudinaux desdits deux arbres à vis sans fin, la liaison rotule à doigt étant configurée pour interdire une rotation relative entre lesdits deux arbres à vis sans fin autour de l'axe longitudinal de chacun desdits deux arbres à vis sans fin.

On entend par l'expression « interdire une rotation relative » que la liaison rotule à doigt est configurée pour, en fonctionnement, transmettre le mouvement de rotation de l'un des arbres à vis sans fin à l'autre. Toutefois, la liaison rotule à doigt pourra autoriser une telle rotation relative sur un angle non significatif, par exemple en raison d'un léger jeu en rotation relative qui conduit à un léger retard entre le moment où l'un des arbres à vis sans fin commence à tourner et le moment où l'autre arbre à vis sans fin commence à tourner, sans pour autant que l'on s'écarte du cadre de la présente invention.

De préférence, la ou chaque liaison rotule à doigt se situe dans l'espace délimité par l'intérieur des arbres à vis sans fin adjacents, dont au moins les extrémités sont à cet effet creuses.

La liaison rotule à doigt pourrait être un joint de cardan.

Conformément à un mode de réalisation particulier de la présente invention, la ou chaque liaison rotule à doigt comprend une partie mâle solidaire de l'un des deux arbres à vis sans fin adjacents, et une partie femelle solidaire de l'autre arbre à vis sans fin et dans laquelle la partie mâle est reçue de façon à être apte à tourner par rapport à la partie femelle sauf dans les directions de rotation coaxiales aux axes longitudinaux des deux arbres à vis sans fin, les parties mâle et femelle comprenant des moyens d'accouplement configurés pour transformer un mouvement de rotation d'un arbre à vis sans fin autour de son axe longitudinal en un mouvement de rotation de l'autre arbre à vis sans vis fin autour de l'axe longitudinal de ce dernier, chacune des parties mâle et femelle se situant dans ou s'étendant à partir de l'intérieur d'une extrémité de l'arbre à vis sans fin respectif.

Une telle configuration de la liaison rotule à doigt est plus robuste qu'un joint de cardan, et, comme cela sera explicité ci-après, permet une séparation des deux arbres adjacents pour un repliement du dispositif de récolte.

De préférence, les moyens d'accouplement comprennent des dents sur l'une de la partie mâle et de la femelle, et des logements correspondants ménagés dans l'autre de la partie mâle et de la partie femelle, pour un accouplement des deux arbres à vis sans fin adjacents par crabotage radial, les logements étant, de préférence, formés chacun par une fente débouchant à l'extrémité de la partie mâle ou femelle de façon à permettre l'introduction d'une dent respective par coulissement de cette dernière dans la fente.

Conformément à un mode de réalisation particulier de la présente invention, les dents sont des dents radiales s'étendant à partir de la circonférence extérieure de la région d'extrémité libre de la partie mâle et les logements sont des fentes ménagées dans la paroi circonférentielle de la partie femelle et débouchant à l'extrémité libre de ladite paroi circonférentielle.

De préférence, les dents radiales sont asymétriques les unes par rapport aux autres de façon à assurer une fonction d'indexage de la position en rotation des deux arbres à vis sans fin, les fentes étant disposées de manière correspondante.

Comme indiqué ci-dessus, le dispositif de récolte selon la présente invention pourra avantageusement être un dispositif de récolte repliable en deux parties. Le châssis peut ainsi être formé par deux parties de châssis repliables l'une par rapport à l'autre, l'ensemble arbre d'alimentation étant formé par deux arbres à vis sans fin reliés chacun à une partie de châssis respective, les moyens de récolte étant également en deux parties reliées chacune à une partie châssis de respective.

Un autre avantage procuré par la présente invention est qu'elle permet une transmission d'un mouvement de rotation sur plus de deux arbres à vis sans fin.

La présente invention permet donc de réaliser un dispositif de récolte repliable en trois parties, ce qui n'est pas possible avec la solution de l'état antérieur de la technique, basée sur un entraînement à chaque extrémité de l'arbre d'alimentation, puisqu'alors la partie centrale ne serait pas entraînée en rotation.

Par conséquent, selon un mode de réalisation particulier de la présente invention, le châssis est formé par trois parties de châssis repliables, à savoir une partie centrale et deux parties latérales repliables par rapport à la partie centrale, l'ensemble arbre d'alimentation étant formé par trois arbres à vis sans fin reliés chacun à une partie de châssis respective, les moyens de récolte étant également en trois parties reliées chacune à une partie de châssis respective.

Un tel dispositif de récolte repliable en trois parties permet d'augmenter encore la longueur du dispositif de récolte, tout en conservant un mode de repliement qui soit simple et rapide. En effet, la partie centrale pourra être fixe, avec notamment une longueur correspondant à la largeur maximale autorisée pour un véhicule circulant sur des voies ouvertes à la circulation publique, et les deux parties latérales pourront se replier hydrauliquement chacune au-dessus de la partie centrale. Le passage entre la position repliée, pour circulation, et la position déployée, pour utilisation, se fera donc par le seul mouvement, de préférence simultané, des deux parties latérales.

Ceci est avantageux par comparaison aux modes de repliement actuellement connus.

Un tel premier mode consiste à faire pivoter chacune des deux parties d'arbre d'alimentation vers le haut, avec un point de pivotement globalement sur l'axe longitudinal du véhicule. Cependant, il en résulte une gêne visuelle très importante pour le conducteur car les parties d'arbre d'alimentation sont dans son champ de vision, et pour cette raison la longueur de chaque partie d'arbre d'alimentation doit être limitée, ce qui va à l'encontre du but initial recherché.

Un tel second mode consiste à faire pivoter une partie d'arbre d'alimentation pour la placer horizontalement au-dessus de l'autre, dans une position décentrée vis-à-vis de l'axe longitudinal du véhicule, puis à déplacer en translation transversale les deux parties d'arbre d'alimentation pour les centrer sur l'axe longitudinal du véhicule. Ce second mode de repliement ne conduit pas à une gêne visuelle du conducteur, mais est cependant long et nécessite des moyens hydrauliques de déplacement des parties d'arbre plus complexes que ceux requis pour le déplacement des deux parties latérales du dispositif de récolte repliable en trois parties selon la présente invention.

De préférence, l'ensemble arbre d'alimentation est relié à chaque extrémité au châssis par un attelage oscillant.

La présente invention a également pour objet une machine agricole comprenant un véhicule motorisé équipé d'un dispositif de récolte tel que défini ci-dessus.

Pour mieux illustrer l'objet de la présente invention, on va en décrire ci-après, à titre illustratif et non limitatif, un mode de réalisation particulier, avec référence aux dessins annexés.

Sur ces dessins :
- la Figure 1 est une vue en perspective d'un dispositif de ramassage d'andains repliable en trois parties selon un mode de réalisation particulier de la présente invention ;
- la Figure 2 est une vue en perspective d'une extrémité d'un premier arbre à vis sans fin, duquel est solidaire la partie mâle de la liaison rotule à doigt ;
- la Figure 3 est une vue en perspective d'une extrémité d'un second arbre à vis sans fin adjacent au premier arbre à vis sans fin, duquel est solidaire la partie femelle de la liaison rotule à doigt ;
- la Figure 4A est une vue en coupe des premier et second arbres à vis en position accouplée ;
- la Figure 4B est une vue analogue à la Figure 4A, montrant les premier et second arbres à vis en position accouplée après un léger pivotement relatif entre les deux arbres ;
- la Figure 5A est une vue schématique de face d'une machine agricole selon la présente invention, équipée du dispositif de ramassage d'andains de la Figure 1, en position d'utilisation ; et
- la Figure 5B est une vue schématique de face de la machine agricole en position repliée.

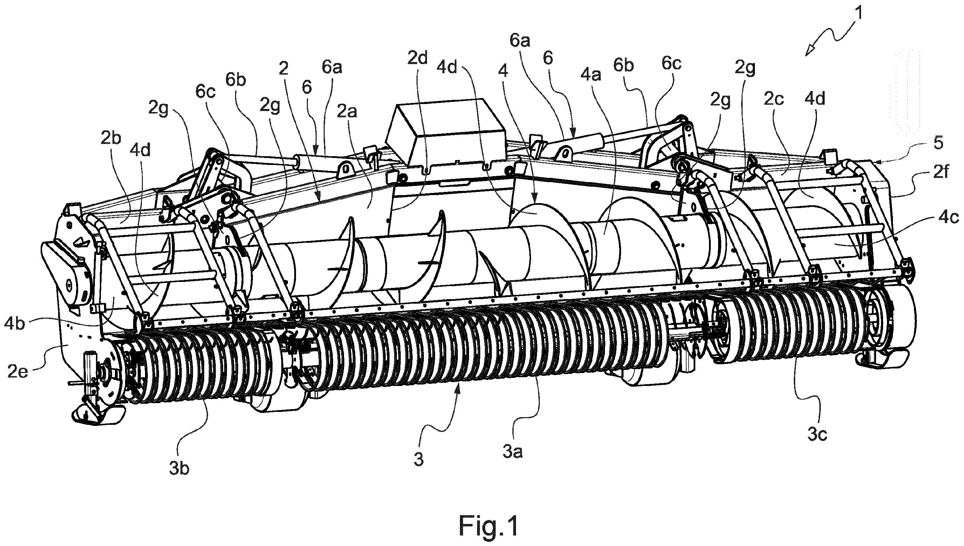

Si l'on se réfère à la Figure 1, on peut voir que l'on y a représenté une vue d'ensemble d'un dispositif de ramassage d'andains 1 selon un mode de réalisation particulier de la présente invention, en position d'utilisation.

De manière classique, le dispositif 1 comprend un châssis 2, un ramasseur 3, un ensemble arbre d'alimentation 4 et un moyen 5 d'entraînement en rotation de l'ensemble arbre d'alimentation.

Le dispositif 1 est repliable en trois parties et le châssis 2 est à cet effet réalisé en trois parties mécanosoudées, à savoir une partie centrale 2a fixe et deux parties latérales 2b, 2c repliables par rapport à la partie centrale 2a sous l'action de moyens hydrauliques 6, qui sont, dans l'exemple illustré, formés, d'une manière très générale, par des vérins hydrauliques dont les corps 6a sont articulés à la partie centrale 2a et les tiges 6b sont articulées aux parties latérales 2b, 2c de façon à faire pivoter ces dernières autour d'axes de pivot 6c.

La partie centrale 2a du châssis 2 est de manière générale formée par un corps qui présente une ouverture de sortie 2d par laquelle les andains sortent du dispositif 1 sous l'action de l'ensemble arbre d'alimentation 4. La partie centrale 2a est également munie de moyens de fixation à un véhicule tracteur, bien connus de l'homme du métier et qui ne seront pas décrits en détail ici.

Chaque partie latérale 2b, 2c du châssis 2 comprend un corps auquel est reliée une plaque d'extrémité 2e, 2f transversale à la direction longitudinale du dispositif 1 et servant au montage du ramasseur 3 et de l'ensemble arbre d'alimentation 4.

Le ramasseur 3 est également réalisé en trois parties, à savoir une partie centrale 3a reliée à la partie centrale 2a du châssis 2 et deux parties latérales 3b, 3c reliées chacune à une partie latérale 2b, 2c respective du châssis 2. De manière analogue aux demandes FR 2868905 A1 et EP 0755621 A1 citées ci-dessus, en position d'utilisation les parties 3a, 3b, 3c sont accouplées les unes aux autres par un système de crabotage à crabots axiaux. Le ramasseur 3 étant monté fixe en position par rapport au châssis 2, cela ne pose aucune difficulté.

L'ensemble arbre d'alimentation 4 est également réalisé en trois parties, à savoir un arbre central 4a relié à la partie centrale 2a du châssis 2 par deux plaques de liaison 2g, et deux arbres latéraux 4b, 4c reliés chacun d'une part à une plaque d'extrémité 2e, 2f respective et, à l'autre extrémité, à une autre plaque de liaison 2g solidaire de la partie latérale 2b, 2c respective du châssis 2. Les arbres 4a, 4b, 4c sont portés par les différentes plaques 2e, 2f, 2g à rotation autour de leurs axes longitudinaux. De plus, les plaques 2e, 2f et 2g sont elles-mêmes montées à pivotement libre par rapport au corps de la partie de châssis 2a, 2b, 2c respective, toutes autour d'un même axe de pivotement situé globalement au-dessus de l'axe longitudinal de l'ensemble arbre d'alimentation 4 et en arrière de ce dernier, de façon à permettre aux arbres 4a, 4b, 4c de se déplacer librement en hauteur en suivant un arc de cercle.

Les arbres 4a, 4b, 4c portent chacun une vis sans fin 4d, lesquelles sont agencées pour former une vis sans fin continue lorsque le dispositif 1 est en position d'utilisation.

Le moyen d'entraînement 5, dont seul le carter est représenté sur la Figure 1, est porté, dans l'exemple illustré, par la partie latérale 2c du châssis 2 et est configuré pour entraîner en rotation l'arbre latéral 4c autour de l'axe longitudinal de ce dernier.

Le moyen d'entraînement 5 peut être tout moyen approprié pour obtenir une telle rotation, et être par exemple formé par un moteur dont l'axe de sortie fait tourner une poulie sur laquelle est enroulée une courroie ou une chaîne également enroulée sur une poulie portée par un axe solidaire de l'arbre latéral 4c. Bien entendu, on pourra prévoir un entraînement direct par moteur, par exemple hydraulique.

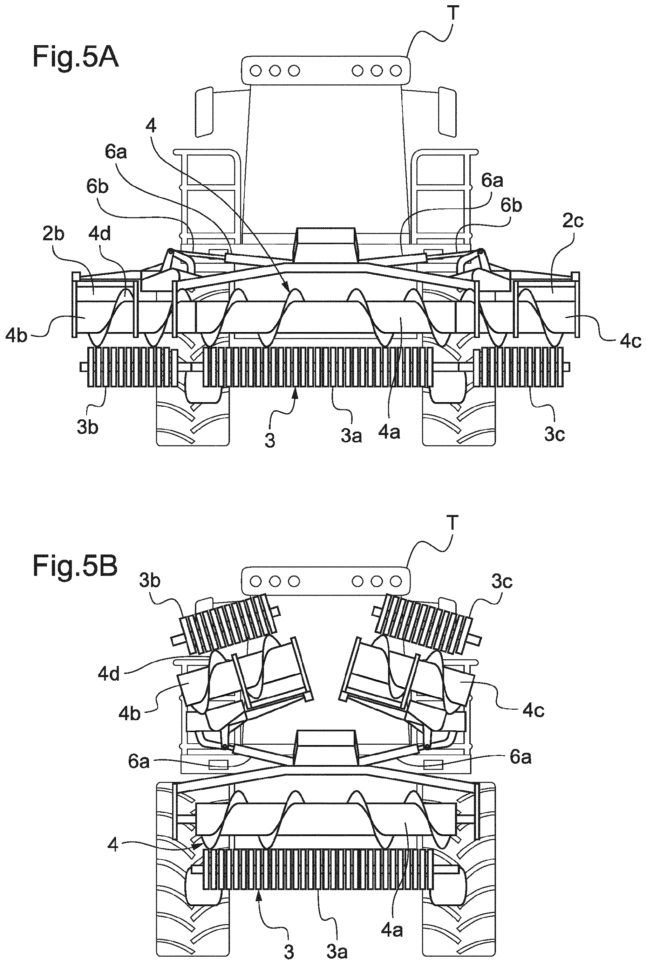

Chaque partie latérale 3b, 4b et 3c, 4c du ramasseur 3 et de l'ensemble arbre d'alimentation 4 se déplace d'un seul tenant avec la partie latérale 2b, 2c respective du châssis 2 lors des opérations de repliement vers la position dite de circulation (Figure 6) et de dépliement vers la position d'utilisation (Figure 5).

Dans la position d'utilisation, les arbres 4a, 4b, 4c sont accouplés par des liaisons rotules à doigt 7 de telle sorte que le mouvement de rotation de l'arbre latérale 4c est transmis à l'arbre central 4a, puis à l'autre arbre latéral 4b.

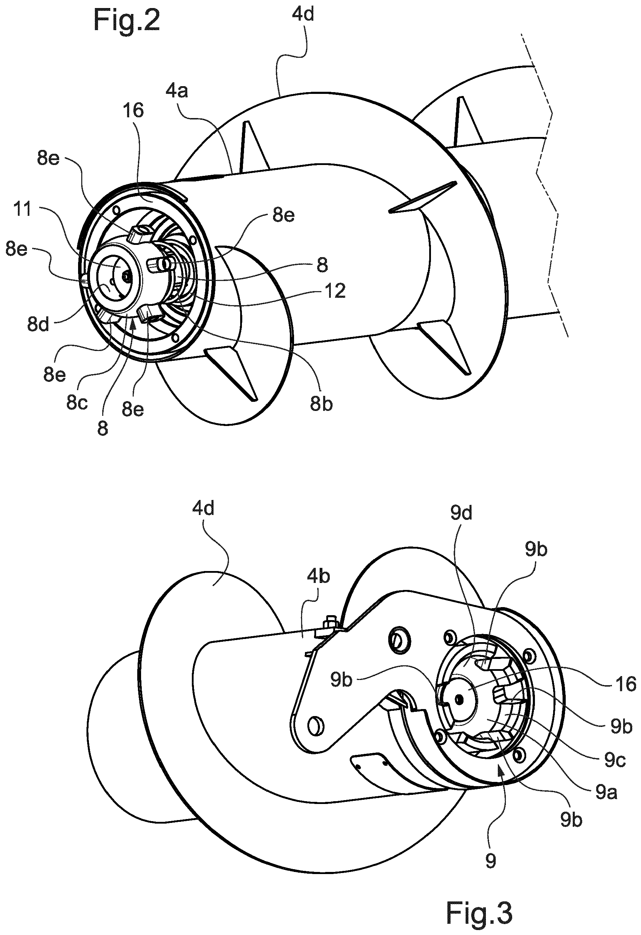

On va maintenant décrire plus précisément la liaison rotule à doigt 7 selon un mode de réalisation particulier de la présente invention, avec référence aux Figures 2 à 4B.

On note tout d'abord que les arbres 4a, 4b, 4c sont creux et que les différentes pièces composant la liaison rotule à doigt 7 sont toutes reçues à l'intérieur des arbres 4a, 4b, 4c. On comprend donc aisément que l'accouplement selon la présente invention n'affecte pas la fonction d'alimentation de la vis sans fin de l'ensemble arbre d'alimentation 4.

La liaison rotule à doigt 7 selon la présente invention comprend une partie mâle 8 et une partie femelle 9.

Si l'on se réfère en particulier à la Figure 2, on peut voir que la partie mâle 8 comprend une barre cylindrique 8a portant plusieurs nervures longitudinales 8b, dans l'exemple illustré quatre nervures 8b équiangulairement espacées sur la circonférence de la barre 8a. Une extrémité de la barre 8a est rendue solidaire, indirectement comme cela sera décrit ci-après, d'une platine 10 solidaire de l'arbre central 4a, par exemple par soudage du bord de la platine 10 contre la paroi intérieure de l'arbre central 4a.

Un champignon 8c est monté sur l'autre extrémité de la barre 8a.

Dans l'exemple illustré, le champignon 8c est immobilisé en position, d'une part, par une plaque 11 reçue dans un creux central 8d ménagé dans le champignon 8c et vissée en son centre à la barre 8a, et dont la région de bordure appuie sur un épaulement dudit creux 8d, et, d'autre part, par appui d'un ressort de compression 12 dont une extrémité prend appui sur une bague de verrouillage 13 dont la fonction sera explicitée ci-après, et dont l'autre extrémité est reçue dans une gorge annulaire (non visible) ménagée dans le champignon 8c. L'entraînement en rotation du champignon 8c par la barre 8a est assuré par engagement des nervures 8b dans des rainures correspondantes prévues dans le champignon 8c.

Des dents 8e sont montées dans des logements ménagés à cet effet dans la circonférence extérieure du champignon 8c. Les dents 8e s'étendent radialement et sont disposées de manière asymétrique pour assurer une fonction d'indexage.

La rotation de la barre 8a est guidée au voisinage de la platine 10 par un roulement 14 dont la bague intérieure est montée fixe entre la bague de verrouillage 13 et un épaulement d'un palier 15 solidaire de la barre 8a par engagement des nervures 8b dans des rainures correspondantes prévues dans le palier 15, et dont la bague extérieure est montée fixe sur un support cylindrique 16 également reçu à l'intérieur de l'arbre central 4a et fixé à une plaque 2g (non représentée sur cette Figure).

Le palier 15 est formé par une partie tubulaire, dans la paroi intérieure de laquelle sont ménagées lesdites rainures, la partie tubulaire étant d'un seul tenant à une plaque circulaire 15a fixée par vissage à la platine 10. La barre 8a est ainsi rendue solidaire de la platine 10 par l'intermédiaire du palier 15.

Si l'on se réfère maintenant aux Figures 3 à 4B, on peut voir que la partie femelle 9 comprend une pièce en forme de cloche 9a, désignée par cloche 9a ci-après. Des fentes 9b s'étendent à partir du bord libre de la paroi circonférentielle 9c de la cloche 9a, jusqu'au fond 9d de la cloche 9a.

Les fentes 9b sont disposées de manière asymétrique, d'une manière correspondant à celles des dents 8e, de telle sorte qu'en position d'utilisation chaque dent 8e est reçue, par coulissement, dans une fente 9b correspondante. La largeur des fentes 9b est ainsi légèrement supérieure à l'épaisseur des dents 8e. Afin de faciliter l'introduction des dents 8e dans les fentes 9b, ces dernières s'élargissent à mesure qu'elles se rapprochent du bord libre de la cloche 9a.

Le fond 9d de la cloche 9a présente un trou central 9e par lequel la cloche 9a est enfilée sur une barre cylindrique 9f analogue à la barre 8a, et qui porte ainsi des nervures 9g s'engageant dans des rainures correspondantes prévues dans le trou central 9e de la cloche 9a pour un entraînement en rotation de cette dernière. La barre 9f est rendue solidaire de l'arbre latéral 4b de la même manière que la barre 8a est rendue solidaire de l'arbre central 4a, à savoir par engagement des nervures 9g dans des rainures d'un palier 15 d'un seul tenant à une plaque 15a vissée sur une platine 10 elle-même rendue solidaire de l'arbre latéral 4b. Le guidage en rotation de la barre 9f, et donc de la cloche 9a, est également réalisé par un roulement 14 dont la bague intérieure est maintenue en position entre une bague de verrouillage 13 et un épaulement du palier 15.

La cloche 9a est fixée en translation sur la barre 9f en étant prise en sandwich entre la face d'extrémité 15b du palier 15, formant épaulement, et une plaque de fixation 16 vissée en son centre à la barre 9f et dont la région de bordure appuie sur le fond 9d de la cloche 9a.

En résumé, la cloche 9a est solidaire en rotation de l'arbre latéral 4b et ne s'étend pas hors de ce dernier, tandis que le champignon 8c est solidaire en rotation de l'arbre central 4a et s'étend hors de ce dernier de façon à être reçu dans la cloche 9a.

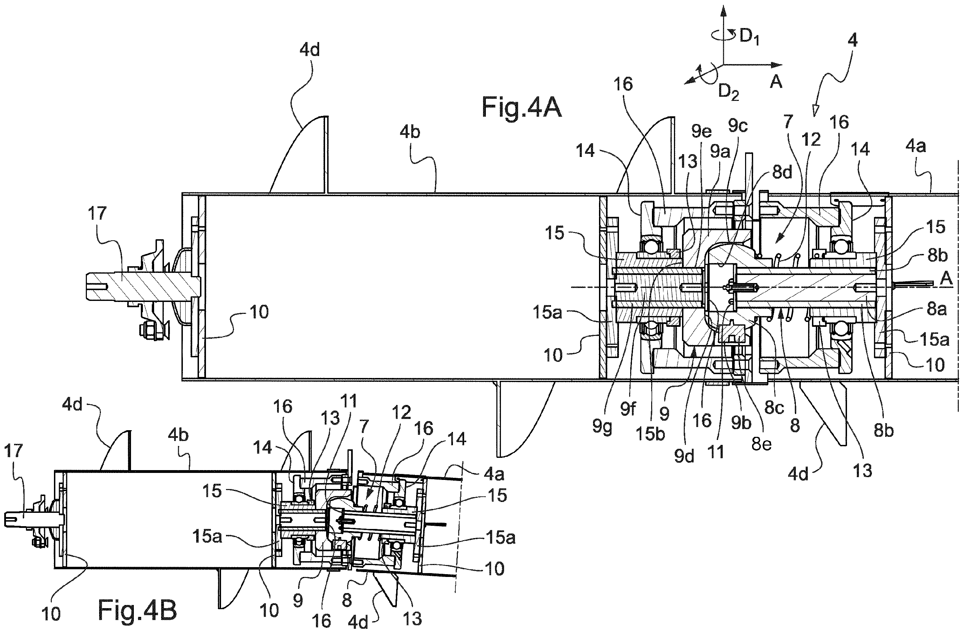

Enfin, toujours sur la Figure 4A, on peut voir que l'arbre latéral 4b est rotatif par l'intermédiaire d'un axe 17, solidaire de l'arbre latéral 4b, l'axe 17 étant monté à rotation sur la plaque d'extrémité 2e à une extrémité de ce dernier et solidaire, directement ou indirectement, d'une platine 10 rendue solidaire de l'intérieur de l'arbre latéral 4b, à son autre extrémité.

On comprendra aisément que lorsque l'arbre central 4a est entraîné en rotation, par l'arbre latéral 4c, à sa première extrémité, la barre 8a est simultanément entraînée en rotation et entraîne elle-même en rotation la cloche 9a, par appui des dents 8e du champignon 8c contre les bords des fentes 9b, ce qui entraînera en rotation l'arbre latéral 4b.

On souligne ici que les dimensions extérieures de la partie du champignon 8c qui est reçue dans la cloche 9a sont au moins légèrement inférieures aux dimensions du creux de la cloche 9a et que les profondeurs des fentes 9b (du bord libre de la paroi circonférentielle 9c au fond 9a) est au moins légèrement supérieure à la longueur des dents 8e. Une telle configuration offre au champignon 8c des degrés de liberté, au moins légers, autour de deux directions de rotation D1 et D2 perpendiculaires l'une à l'autre et appartenant à un plan perpendiculaire à l'axe longitudinal A de la barre 8a, comme on peut le voir sur la Figure 4B. Par exemple, on pourrait prévoir un angle maximal, pour la rotation relative autour des directions D1 et D2, d'une valeur de ±15° (sens horaire/sens anti-horaire).

Les différentes dimensions du champignon 8c et de la cloche 9a pourront être choisies pour autoriser des degrés de liberté plus ou moins importants, en fonction des variations de hauteur que les arbres 4a, 4b, 4c auront à suivre, par exemple en fonction du type de produit agricole qui sera récolté. En cas de variations de hauteur importantes, il conviendra d'autoriser une liberté de rotation dans lesdites deux directions qui sera plus grande que dans le cas où les variations de hauteur sont faibles.

On peut souligner ici que la surface circonférentielle extérieure de la partie du champignon 8c qui est reçue dans la cloche 9a est légèrement arrondie, tout comme la transition entre la paroi circonférentielle 9c et le fond 9d de la cloche 9a, ce qui permet d'améliorer le guidage des rotations relatives entre le champignon 8c et la cloche 9a.

La liaison rotule à doigt 7 selon la présente invention permet donc à la fois d'assurer un accouplement de deux arbres adjacents 4a, 4b, 4c en rotation, tout en permettant un déplacement en rotation relative des deux arbres 4a, 4b, 4c dans les autres degrés de liberté en rotation.

La présente invention permet donc, en position d'utilisation comme représenté sur la Figure 5A, monté sur un tracteur T, d'avoir un dispositif de récolte 1 avec un seul entraînement de l'ensemble arbre d'alimentation 4 tout en évitant les problèmes de rupture ou d'interruption de l'entraînement due aux variations de hauteur entre les différentes parties de l'ensemble arbre d'alimentation 4.

Lorsque l'on souhaite replier le dispositif de récolte 1, il suffit de rétracter les vérins 6 pour faire pivoter vers le haut les parties latérales 2b, 2c du châssis 2 simultanément, faisant ainsi pivoter d'un seul tenant les arbres latéraux 4b, 4c. Les fentes 9b étant débouchantes, ce pivotement conduira simplement à la sortie des dents 8e hors des fentes 9b, sans aucun obstacle au mouvement des parties latérales 2b, 2c du châssis 2.

La présente invention permet donc un repliement aisé et rapide du dispositif de récolte 1 en trois parties, comme représenté sur la Figure 5a, pour une circulation sur voies ouvertes à la circulation publique, sans aucune gêne visuelle pour le conducteur.

Pour revenir à la position d'utilisation, il suffit d'étendre les vérins 6 pour faire pivoter vers le bas les deux parties latérales 2b, 2c du châssis 2 simultanément, jusqu'à ce que les axes longitudinaux des arbres 4a, 4b, 4c soient quasiment alignés. Tout en poursuivant l'extension des vérins 6, on entraîne alors en rotation l'arbre latéral 4c à une vitesse lente de sorte que les dents 8e du champignon 8c solidaire de l'extrémité libre de l'arbre latéral 4c s'aligneront avec les fentes 9b respectives de la cloche 9a solidaire de l'extrémité adjacente de l'arbre central 4a à un instant donné, instant auquel les dents 8e viendront se placer dans les fentes 9b sous l'action du vérin 6 et le mouvement de rotation de l'arbre latéral 4c sera alors transmis à l'arbre central 4a.

A l'autre extrémité de l'arbre central 4a, la barre 8a solidaire de ce dernier tournera lentement et de la même manière les dents 8e de celle-ci s'aligneront à un instant avec les fentes 9b de la cloche 9a solidaire de l'arbre latéral 4b, instant auquel lesdites dents 8e s'engageront dans lesdites fentes 9b sous l'action du vérin 6 et le mouvement de rotation sera alors transmis de l'arbre central 4a à l'arbre latéral 4b.

On souligne ici que disposer les dents 8e et les fentes 9b d'une manière asymétrique qui permette de ne définir qu'une seule position angulaire dans laquelle les dents 8e (partie mâle) et les fentes 9b (partie femelle) peuvent s'engager, permet de s'assurer que les vis sans fin 4d portées par les arbres 4a, 4b, 4c forment ensemble une vis sans fin continue le long de l'ensemble arbre d'alimentation 4, afin d'assurer une alimentation optimale des andains vers la sortie 2d du dispositif 1.

Il est bien entendu que les modes de réalisation ci-dessus de la présente invention ont été donnés à titre indicatif et non limitatif et que des modifications pourront y être apportées sans que l'on s'écarte pour autant du cadre de la présente invention.

## Revendications

1. Dispositif de récolte (1) destiné à être fixé à un véhicule motorisé, le dispositif de récolte (1) comprenant un châssis (2) auquel sont reliés des moyens de récolte (3) configurés pour récolter des produits agricoles sur champ et un ensemble arbre d'alimentation (4) surplombant les moyens de récolte (3) et configuré pour collecter les produits agricoles récoltés par les moyens de récolte (3) et les acheminer vers une sortie (2d) du dispositif de récolte (1), étant prévu, à une extrémité de l'ensemble arbre d'alimentation (4), un moyen (5) d'entraînement en rotation de l'ensemble arbre d'alimentation (4), **caractérisé par le fait que** l'ensemble arbre d'alimentation (4) est formé par au moins deux arbres à vis sans fin (4a, 4b, 4c) accouplés l'un à l'autre de façon à permettre la transmission d'un mouvement de rotation d'un arbre à vis sans fin (4a, 4b, 4c) à l'autre, chaque arbre à vis sans fin (4a, 4b, 4c) étant accouplé à l'arbre à vis sans fin adjacent (4a, 4b, 4c) par une liaison rotule à doigt (7) dont le centre est l'intersection des axes longitudinaux (A) desdits deux arbres à vis sans fin (4a, 4b, 4c), la liaison rotule à doigt (7) étant configurée pour sensiblement interdire une rotation relative entre lesdits deux arbres à vis sans fin (4a, 4b, 4c) autour de l'axe longitudinal (A) de chacun desdits deux arbres à vis sans fin (4a, 4b, 4c).

2. Dispositif de récolte (1) selon la revendication 1, **caractérisé par le fait que** la ou chaque liaison rotule à doigt (7) se situe dans l'espace délimité par l'intérieur des arbres à vis sans fin adjacents (4a, 4b, 4c), dont au moins les extrémités sont à cet effet creuses.

3. Dispositif de récolte (1) selon la revendication 2, **caractérisé par le fait que** la ou chaque liaison rotule à doigt (7) comprend une partie mâle (8) solidaire de l'un des deux arbres à vis sans fin adjacents (4a, 4b, 4c), et une partie femelle (9) solidaire de l'autre arbre à vis sans fin (4a, 4b, 4c) et dans laquelle la partie mâle (8) est reçue de façon à être apte à tourner par rapport à la partie femelle (9) sauf dans les directions de rotation coaxiales aux axes longitudinaux (A) des deux arbres à vis sans fin (4a, 4b, 4c), les parties mâle (8) et femelle (9) comprenant des moyens d'accouplement (8e, 9b) configurés pour transformer un mouvement de rotation d'un arbre à vis sans fin (4a, 4b, 4c) autour de son axe longitudinal (A) en un mouvement de rotation de l'autre arbre à vis sans vis fin (4a, 4b, 4c) autour de l'axe longitudinal (A) de ce dernier, chacune des parties mâle (8) et femelle (9) se situant dans ou s'étendant à partir de l'intérieur d'une extrémité de l'arbre à vis sans fin respectif (4a, 4b, 4c).

4. Dispositif de récolte (1) selon la revendication 3, **caractérisé par le fait que** les moyens d'accouplement (8e, 9b) comprennent des dents (8e) sur l'une de la partie mâle (8) et de la partie femelle (9), et des logements (9b) correspondants ménagés dans l'autre de la partie mâle (8) et de la partie femelle (9), pour un accouplement des deux arbres à vis sans fin adjacents (4a, 4b, 4c) par crabotage radial, les logements (9b) étant, de préférence, formés chacun par une fente (9b) débouchant à l'extrémité de la partie mâle (8) ou femelle (9) de façon à permettre l'introduction d'une dent respective (8e) par coulissement de cette dernière dans la fente (9b).

5. Dispositif de récolte (1) selon la revendication 4, **caractérisé par le fait que** les dents (8e) sont des dents radiales (8e) s'étendant à partir de la circonférence extérieure de la région d'extrémité libre de la partie mâle (8) et que les logements (9b) sont des fentes (9b) ménagées dans la paroi circonférentielle (9c) de la partie femelle (9) et débouchant à l'extrémité libre de ladite paroi circonférentielle (9c).

6. Dispositif de récolte (1) selon la revendication 5, **caractérisé par le fait que** les dents radiales (8e) sont asymétriques les unes par rapport aux autres de façon à assurer une fonction d'indexage de la position en rotation des deux arbres à vis sans fin (4a, 4b, 4c), les fentes (9b) étant disposées de manière correspondante.

7. Dispositif de récolte selon l'une des revendications 5 et 6, **caractérisé par le fait que** le châssis est formé par deux parties de châssis repliables l'une par rapport à l'autre, l'ensemble arbre à vis d'alimentation étant formé par deux arbres à vis sans fin reliés chacun à une partie de châssis respective, les moyens de récolte étant également en deux parties reliées chacune à une partie châssis de respective.

8. Dispositif de récolte (1) selon l'une des revendications 5 et 6, **caractérisé par le fait que** le châssis (2) est formé par trois parties de châssis repliables (2a, 2b, 2c), à savoir une partie centrale (2a) et deux parties latérales (2b, 2c) repliables par rapport à la partie centrale (2a), l'ensemble arbre d'alimentation (4) étant formé par trois arbres à vis sans fin (4a, 4b, 4c) reliés chacun à une partie de châssis respective (2a, 2b, 2c), les moyens de récolte (3) étant également en trois parties (3a, 3b, 3c) reliées chacune à une partie de châssis respective (2a, 2b, 2c).

9. Dispositif de récolte (1) selon l'une des revendications 1 à 8, **caractérisé par le fait que** l'ensemble arbre d'alimentation (4) est relié à chaque extrémité au châssis (2) par un attelage oscillant.

10. Machine agricole comprenant un véhicule motorisé équipé d'un dispositif de récolte (1) tel que défini à l'une des revendications 1 à 9.
